Europäisches Patentamt

European Patent Office

Office européen des brevets

(19)

(11) Publication number: **0 426 500 A1**

# EUROPEAN PATENT APPLICATION

(12)

(21) Application number: 90312072.3

(51) Int. Cl.⁵: **F02K 3/075, F02K 3/065**

(22) Date of filing: 02.11.90

(30) Priority: 03.11.89 GB 8924871

(43) Date of publication of application:
08.05.91 Bulletin 91/19

(84) Designated Contracting States:
DE FR GB

(71) Applicant: ROLLS-ROYCE plc
65 Buckingham Gate
London, SW1E 6AT(GB)

(72) Inventor: Lowrie, Brian Wilfred
5 Hollow Road
Almondsbury, Bristol(GB)
Inventor: Jordan, Terence
1C Hentleytor
Wotton-under-Edge, Gloucestershire(GB)

(74) Representative: Bird, Vivian John et al
Rolls-Royce plc, Intellectual Property
Department, P.O. Box 3
Filton, Bristol BS12 7QE(GB)

(54) **Tandem fan engine.**

(57) A folded tandem fan engine has the second or downstream fan section (22) mounted towards the rear of the engine and receiving air from the bypass duct (24). The flow from the front upstream fan is permanently divided to supply the core engine and the bypass duct (24) in all operating conditions. A changeover valve (26) in the bypass duct between the fan sections ducts the bypass flow directly from the front fan (10) to the second fan (22) in a high thrust mode. In a low thrust mode the changeover valve (26) ejects the bypass flow from the front fan (10) and opens an auxiliary inlet means (40) to supply the second fan (10). The front fan (10) continues to supply air to the core engine in both operating modes unaffected by the changeover valve (26).

LOW SPECIFIC THRUST MODE

*Fig.2.*

HIGH SPECIFIC THRUST MODE

## TANDEM FAN ENGINE

The invention relates to a tandem fan engine and, in particular, it concerns a propulsion engine for a supersonic transport aircraft.

The propulsion system for a second generation supersonic transport while having the best feasible performance at cruise conditions will need to be adaptable enough to produce noise levels around airports no worse than today's requirements for new aircraft, to operate economically subsonic and to minimise harmful emissions.

Even in meeting the target of noise levels no worse than contemporary aircraft, the engine control system on the Olympus 593 in Concorde has a significant degree of cycle variability. At flyover conditions the engine mass flow is maintained virtually the same as at maximum take off thrust by increasing the primary nozzle area. This achieves an increase in flow of up to 20% under some conditions. Clearly in the current context a much greater variability is required by approximately a factor of order two.

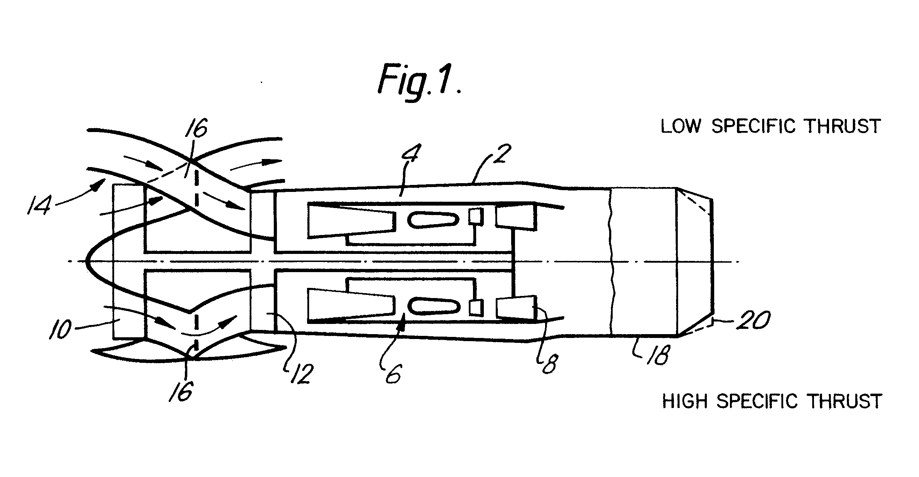

The tandem fan engine was envisaged as a variable cycle system that would, by virtue of changing between two modes of operation, both provide near-optimum, performance at cruise and sufficiently low specific thrust at take off and approach conditions to satisfy noise requirements. The major advantage identified for this layout was that it provided a means of engine cycle variation which, at least in principle, did not increase the frontal area of the engine installation beyond that required to simply accept the airflow required at cruise. This has been found to be a major consideration at supersonic cruise Mach numbers in the region of two and below. The detail of how such a concept could be realised mechanically has been studied in some depth and resulted in the style of installation shown in figure 1.

The main innovative features of this invention are that during supersonic cruise the engine operates as a normal bypass engine. However, the fan or LP comressor is split physically into two parts connected by a power shaft but separated by a duct housing a changeover mechanism. During subsonic flight the changeover mechanism is used to discharge air entering the forward portion of the fan through an auxiliary nozzle and through auxiliary intakes to supply the air to the rearward portion of the fan and the rest of the engine. The important feature is that the auxiliary nozzle, intakes and duct, including the changeover mechanism, can all be contained within the cross-section envelope of the front engine face. In fact the installation illustrated assumes that since the engine is close-coupled to the wing, the cross-section area will be increased in the corners to allow a near perpendicular intersection between the nacelle cowling and the wing undersurfaces. This feature obviously needs to be optimised in a given installation.

Alternative systems to the tandem fan have been considered which achieve the same specific thrust or noise at the take-off condition. An inevitable disadvantage of any variable cycle engine is additional weight and the drag it imposes at cruise. The tandem fan is no exception. The extra length of flow diverters, auxiliary intakes and nozzle comrising the changeover mechanism all add weight and the additional length of the inlet duct also adds skin friction drag. It is an object of the present invention to overcome these drawbacks.

According to the present invention in its broadest aspect an improved tandem fan engine comprises a first fan section positioned upstream of the core gas generator and a second fan section positioned downstream.

According to the invention there is provided a tandem fan engine comprising a bypass turbofan engine having a core gas generator, a bypass duct, an intake flow splitter, a first fan section upstream of the flow splitter so that mass flow from the first fan section is divided between the core gas generator and the bypass duct, a second fan section spaced axially downstream of the first fan section and the flow splitter, and changeover valve means which in a first operative position conveys bypass flow to the second fan section and in a second alternative operative position directs the first fan bypass flow to at least one flow ejector means and opens auxiliary intake means to supply ambient air to the second fan section.

The second fan section may be driven from the same turbine stage of the core gas generator as the first fan section. Alternatively, the two fan sections may be driven by different turbine stages. Preferably the second downstream fan section is driven by a lower pressure turbine stage relative to the upstream fan section.

The invention will now be described in greater detail with reference, by way of example only, to the accompanying drawing, in which:

Figure 1 shows a schematic illustration of the layout of the principal components of a tandem fan engine,

Figure 2 shows a corresponding illustration of the layout of a folded tandem fan engine in accordance with the invention and,

Figure 3 shows a modified layout of a folded tandem fan engine.

Referring now to the drawings, figure 1 shows a known tandem fan engine arrangement of the type mentioned above. The engine is illustrated in alternative configurations for low specific thrust and high specific thrust above and below the centre line respectively. The outer engine casing 2 defines the outer wall of an annular bypass duct 4 concentric with a core gas generator indicated generally at 6. The turbine section 8 of the engine drives two tandem fans 10 and 12 at the forward end of the engine in an enlarged intake duct 14.

Housed within the duct 14 and lying between the fan sections 10 and 12 there is a diverter valve 16, which is shown in alternative positions above and below the centre line of the drawn engine. In the low specific thrust mode, in the upper part of the drawing, the valve occupies a first position in which the output of the front fan 10 is ejected from the duct 14, instead of passing into the core engine through the second fan section 12. Air for the core engine is drawn through auxiliary intakes by the second fan section 12. This mass flow of air is divided downstream of the second fan section 12 so that a proportion of it enters the core engine 6 and the remainder passes through by bypass duct 4. The turbine 8 and bypass duct 4 exhaust into a jet pipe 18 which is terminated by a conventional variable area nozzle 20.

An engine incorporating this arrangement suffers, however, from the disadvantage of increased overall length. Not only has the length increased to accommodate the second fan section but also the changeover valve means, ie diverter valve means 16, between the first and second fan sections.

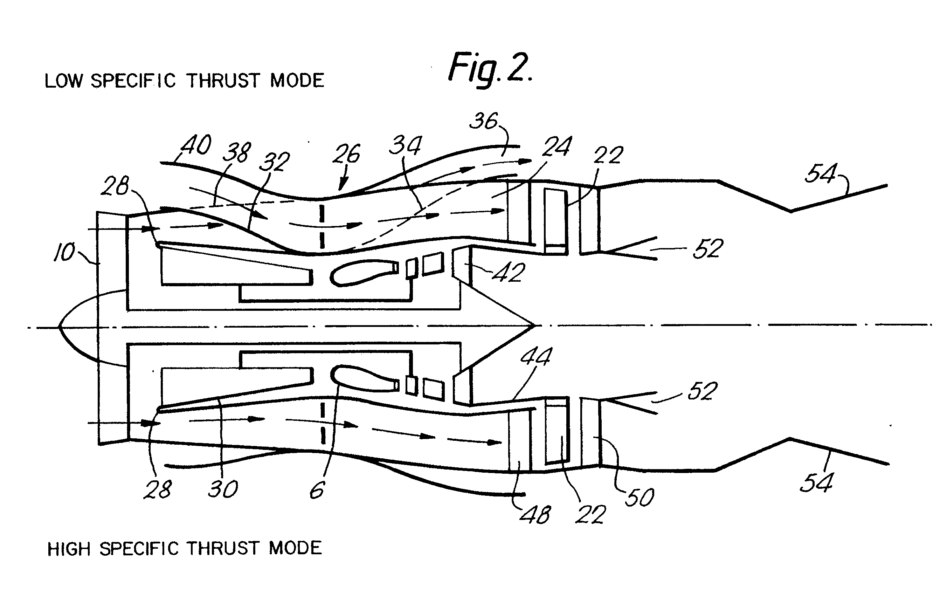

In the engine layout of figure 2 to reduce the length of the engine the two elements of the fan are positioned upstream and downstream of the core gas generator, resulting in a 'Folded Tandem Fan' engine only slightly longer than a simple optimum cruise system. In the drawings like parts have like references.

In figure 2 the basic core engine 6 is largely unchanged. The modifications reside in the structure surrounding the engine. The front fan 10 is also essentially unchanged but the second fan 22 of this arrangement is positioned towards the rear of the core engine and receives air only through the engine bypass duct 24. A changeover system or diverter valve mechanism 26 is located in the bypass duct 24.

In the high specific thrust mode, lower portion of figure 2, the aft fan 22 receives the whole of the bypass flow in the duct 24. In this engine configuration this is a portion only of the total mass flow of the front fan 10. The output from the front fan 10 is divided by an annular splitter 28 into fixed proportions supplied to the bypass duct 24 and to the core engine compressor 30.

In the alternative, low specific thrust mode, see the upper of figure 2, a diverter means comprising blocker elements 32 and ejector elements 34 divert the whole of the bypass flow from the front fan 10 into ejector chutes 36. At the same time auxiliary intakes 38 open and air is entrained by auxiliary intake scoops 40 into the bypass duct 24 to supply the aft fan 22.

The changeover system between the two elements of the fan can now only operate on what is the bypass flow of the cruise engine. Thus the effectiveness is fundamentally less. As a consequence, the rear fan, although passing a smaller flow than the rear fan of the tandem fan of figure 1, has the LP turbine as a hub and therefore is a larger diameter.

The embodiment of figure 2 has the aft fan 22 driven from the LP turbine 42 through a hollow overhung rearwardly extending drive shaft 44. The fan 22, turbine 42 and shaft 44 are co-axial. The core engine exhausts through the centre of this shaft and through a primary nozzle 52. Downstream of the primary nozzle the hot turbine exhaust mixes with cooler bypass air from the second fan section. The mixed flow finally exits through a convergent/divergent final nozzle 54.

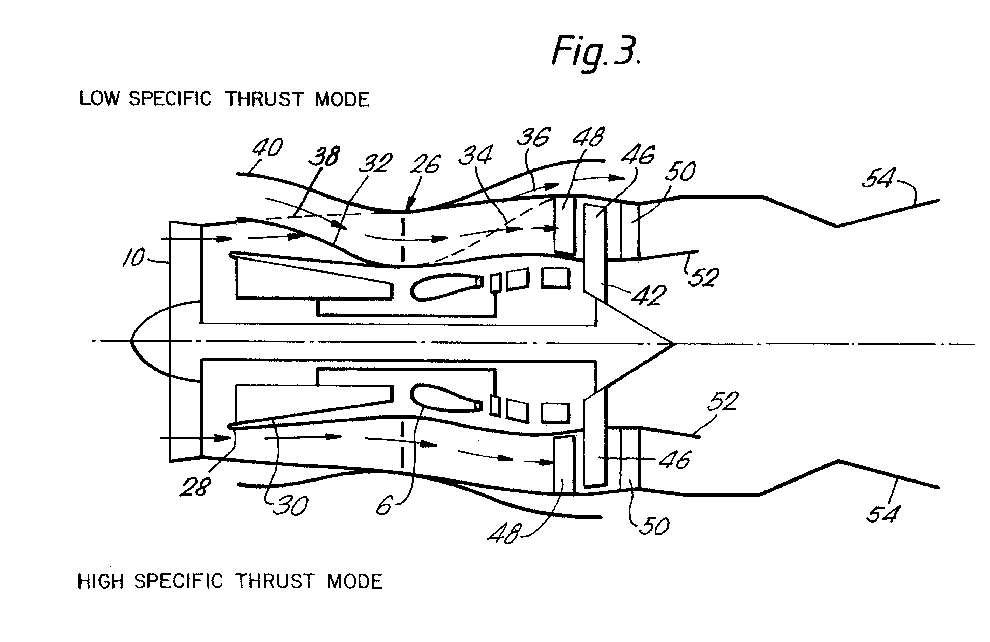

In an alternative embodiment shown in figure 3 the second fan section is arranged concentrically with the LP turbine 42. Such a composite rotary stage as this comprises a disc, a first annular array of turbine blades and a second and concentric annular array of fan blades 46. This reduces the overall length of the engine. The concentric annular gas paths are separated by abutting shrouds between the radial sections of turbine and fan blades.

In a modification of these engines having a single variable flow aft fan the power provided to it can be varied by adjustment of the primary nozzle 52. Accordingly in figures 2 and 3 the guide vanes 48, 50 may be variable. Again because this fan must have an LP turbine as it's hub and must pass a large mass flow at take off, it has a larger diameter than the tandem fan.

In this arrangement two rings of guide vanes 48,50 are disposed on opposite sides of the second fan section 22 comprising annular arrays in the bypass duct. These guide vane rings are positioned towards the aft or downstream end of the bypass duct. One or both sets of vanes may be variable, that is each vane is rotatably mounted about a radial axis extending through the vane mounting. Operating levers (not shown) carried on the radially outer ends of the vane mounting axes and outside the engine casing are coupled to a circumferential unison ring (also not shown). When this unison ring is turned the guide vanes each rotate through the same angle and in unison. Operation of the guide vanes is preferably synchronised with movement of the variable primary nozzle 52.

The variable primary nozzle can be used to reduce the velocity of the turbine exhaust stream and at the same time to encourage mixing with the cooler stream from the aft fan.

Compared to the tandem fan both engine variants are significantly shorter, but both have the disadvantage of a larger maximum diameter.

Both variants are intended to produce the same specific thrust-at take-off and a cruise as the tandem fan. This is successfully achieved quite closely by the 'Folded Tandem Fan'. In order to achieve the take-off specific thrust the aft fan clearly has a lower specific thrust at cruise which makes the whole nacelle larger from inlet through to fully expanded jet. By increasing total mass flow at take-off the nominal bypass ratio is increased thereby improving take-off thrust and subsonic specific fuel consumption. The main or supersonic intake has to accept part only of the take-off flow, the balance entering the engine through the auxiliary intake means.

## Claims

1 A tandem fan engine comprising a bypass turbofan engine having a core gas generator, a bypass duct, an intake flow splitter to divide intake air from a fan section between the core gas generator and the bypass duct, a first fan section upstream of the flow splitter, a second fan section downstream of the first fan section, and changeover valve means having first and second operative positions, in the first position it conveys intake air to the second fan, the core gas generator and the bypass duct and in the second position it directs air from the first fan section to flow ejector means and opens auxiliary intake means to supply ambient air to the second fan section,
characterised in that:
the second fan section and the changeover valve means are located downstream of the flow splitter means so that the second fan section recieves air through the bypass duct, whereby the changeover valve means in its first position conveys intake air from the first fan section to the second fan section through the bypass duct and in its second position directs air in the bypass duct from the first fan section to the ejector means and admits ambient air into the bypass duct to supply the second fan section.

2 A tandem fan engine as claimed in claim 1 wherein the second fan section is located toward the aft end of the bypass duct.

3 A tandem fan engine as claimed in claim 1 or claim 2 wherein the first and second fan sections are driven by the same turbine stage of the core gas generator.

4 A tandem fan engine as claimed in any one of claims 1 to 3 wherein the first and second fan sections are driven by different turbine sections.

5 A tandem fan engine as claimed in claim 4 wherein the second fan section is driven by a lower pressure turbine section relative to the first fan section.

6 A tandem fan engine as claimed in any one of claims 3 to 5 wherein the second fan section is connected with the driving turbine section by means of a rearwardly extending drive shaft.

7 A tandem fan engine as claimed in claim 6 wherein the core engine exhausts through the centre of said rearwardly extending drive shaft.

8 A tandem fan engine as claimed in any one of claims 3 to 5 wherein the second fan section is arranged concentrically with the driving turbine.

9 A tandem fan engine as claimed in claim 8 wherein the second fan section and its driving turbine comprise a common disc, a first annular array of turbine blades mounted around the periphery thereof, and a second annular array of fan blades concentric with the disc and the first annular array.

*Fig.1.*

LOW SPECIFIC THRUST

HIGH SPECIFIC THRUST

## Fig. 2.

LOW SPECIFIC THRUST MODE

HIGH SPECIFIC THRUST MODE

*Fig.3.*

LOW SPECIFIC THRUST MODE

HIGH SPECIFIC THRUST MODE

EP 0 426 500 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 054 030 (PEDERSEN)<br>* Column 3, line 3 - column 4, line 54; figures 1,2 *<br>– – – | 1-3,8,9 | F 02 K 3/075<br>F 02 K 3/065 |
| X | US-A-4 085 583 (KLEES)<br>* Column 3, lines 46-67; figures 4-7 *<br>– – – | 1,3 | |
| X | US-A-3 938 328 (KLEES)<br>* Column 3, lines 43-65; figures 4-7 *<br>– – – | 1,3 | |
| X | US-A-3 879 941 (SARGISSON)<br>* Column 2, line 52 - column 7, line 12; figures 1A,2,3 *<br>– – – | 1,3 | |
| A | GB-A-2 193 999 (ROLLS-ROYCE)<br>* Whole document *<br>– – – | 1,2,4,5,8,9 | |
| A | DE-A-1 426 405 (VEREINIGTE FLUGTECHNISCHE WERKE)<br>* Whole document *<br>– – – – – | 1,2,4,5,8,9 | |

**TECHNICAL FIELDS SEARCHED (Int. Cl.5)**

F 02 K

The present search report has been drawn up for all claims

| Place of search | Date of completion of search | Examiner |
|---|---|---|
| The Hague | 29 January 91 | SERRANO GALARRAGA J. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document